# EUROPEAN PATENT APPLICATION

(11) **EP 4 300 777 A1**
(43) Date of publication of application: **03.01.2024**
(21) Application number: 22181319.9
(22) Date of filing: 27.06.2022
(51) Int. Cl.: H02K 3/24, H02K 9/197, H02K 1/20

(54) **STATOR DEVICE WITH SLOT COOLING**

(71) Applicant: Lotus Tech Innovation Centre GmbH, 65479 Raunheim (DE)
(72) Inventor: Heitmann, Axel, 71229 Leonberg (DE)
(74) Representative: Fuchs Patentanwälte Partnerschaft mbB

(57) **Abstract**

A stator device (100) for an electrical machine (200) comprises a plurality of stator sheets (130) laminated to form at least a portion of a stator body (110) of the stator device (100). The stator body (110) comprises at least one hollow core (H) for accommodating a rotor (210) of the electrical machine (200), and at least one slot (120) extending in the stator body (110) adjacent the hollow core (H), the slot (120) configured to accommodate at least one electrical conductor (142) of a coil arrangement (140) of the stator device (100) and to further provide at least one duct (150) for a liquid coolant (250) of the electrical machine (200). The plurality of stator sheets (130) are sealed against a passage of liquid between adjacent ones of the plurality of stator sheets (130) by means of a bonding (132) provided between the adjacent ones of the plurality of stator sheets (130). Further, the at least one slot (120) is sealed from the hollow core (H) of the stator body (110) in a plane of at least one of the plurality of stator sheets (130) by a portion (114) of the stator body (110) extending between the slot (120) and the hollow core (H).

## Description

The present application relates to a stator device for an electrical machine and to an electrical machine.

### Background

A demand for increased power density in electrical machines exists at present, in particular, in the field of electric mobility, including propulsion systems of electrically powered vehicles, but also in other areas where electric motors are employed. Large power throughputs in electrical machines in combination with desired small form factors exacerbate the requirement of effective cooling in electrical machines, especially of current-conducting parts.

Liquid cooling of a stator device is known. In some electrical machines, cooling of the stator is achieved by immersing at least parts of the stator in a liquid coolant, such as cooling oil, which circulates in a coolant cycle in the electrical machine. For avoiding increased friction of the rotor movement due to immersed coolant in the rotor space, it is known that a separating element in the form of a sleeve or cartridge may be inserted between the stator, in particular the open grooves of the stator, and the rotor, which prevents the coolant from entering into the rotor space. However, such separating elements normally require that a distance between the stator and the rotor is increased, thus often leading to a weaker magnetic field acting on the rotor. Moreover, a separating element can additionally weaken and distort the magnetic field of the stator, which further deteriorates the efficiency of the motor.

For mitigating some of the above drawbacks, a separating element in the form of a cartridge or sleeve has been proposed in document DE 10 2016 101 705 A1. Differently manufactured zones of the cartridge exhibit a varying magnetic permeability and a varying electrical conductivity, according to a geometry of the stator grooves. This is intended to provide reduced weakening of the magnetic field while also reducing the occurrence of eddy currents in the cartridge. However, the production of the cartridge is relatively complicated.

As an alternative, in document WO 2019/183657 A1, it has been proposed that the stator grooves be filled with a potting compound, normally resin or polymer-based, with the conductors of the stator arrangement placed therein. In addition to the conductors, a coolant channel is created in the compound inside the groove by means of a mould, which is placed in the groove during the casting process of the potting compound and which is later removed. However, a process of forming the cooling channels in the cast potting compound is still relatively complicated. Furthermore, the compound surrounding the cooling channel inhibits the transfer of heat from the stator body to the coolant in the cooling channels.

Therefore, there is a need for improved cooling of an electrical machine.

### Summary of the Invention

Accordingly, there is provided a stator device for an electrical machine according to claim 1 and an electrical machine according to claim 13.

According to a first aspect, a stator device for an electrical machine is provided. The stator device comprises a plurality of stator sheets laminated to form at least a portion of a stator body of the stator device. The stator body comprises at least one hollow core for accommodating a rotor of the electrical machine, and at least one slot extending in the stator body adjacent the hollow core, the slot configured to accommodate at least one electrical conductor of a coil arrangement of the electrical machine and to further provide at least one duct for a liquid coolant of the electrical machine. The plurality of stator sheets are sealed against a passage of liquid between adjacent ones of the plurality of stator sheets by means of a bonding provided between the adjacent ones of the plurality of stator sheets. The at least one slot is sealed from the hollow core of the stator body in a plane of at least one of the plurality of stator sheets by a portion of the stator body extending between the slot and the hollow core.

Thus, the stator device can facilitate direct cooling of the stator body and/or of one or more conductors in the at least one slot through direct contact with a liquid coolant in the slot. In addition, the stator device can provide effective sealing of the hollow core from a liquid coolant in the at least one slot. Furthermore, the stator device can facilitate simple production of the stator body, in particular, involving a lamination process of the stator sheets. Prior to laminating the stator sheets, at least some of the stator sheets can be provided with a layer of bonding material on at least one surface of the stator sheet, respectively. The bonding material can be thermally hardened after laminating the respective adjacent stator sheets.

The at least one slot can be sealed from the hollow core of the stator body in a plane of each one of the plurality of stator sheets by a portion of the stator body extending between the slot and the hollow core.

The at least one slot can be sealed from the hollow core of the stator body in the plane of the at least one of the plurality of stator sheets by a portion of the stator sheet extending between the slot and the hollow core. The portion of the stator sheet extending between the slot and the hollow core can be formed integrally with the stator sheet.

Each of the stator sheets can comprise electrically conductive material.

The bonding can be provided between each pair of adjacent ones of the plurality of stator sheets. The bonding can comprise a bonding layer which is arranged between the adjacent ones of the plurality of stator sheets. The bonding can comprise resin.

The stator body can comprise a plurality of slots arranged around the hollow core.

The at least one slot can extend at least essentially parallel to a central axis of the rotor.

The at least one slot can be configured to provide the at least one duct for the liquid coolant in a remaining volume of the slot when the at least one electrical conductor is arranged in the slot.

The at least one slot and a central axis of the hollow core can extend at least essentially perpendicular to the plane of the at least one of the plurality of stator sheets.

The stator device can further comprise a coil arrangement. The coil arrangement can be at least partially arranged in the at least one slot and can be configured for electrically driving the rotor of the electrical machine.

According to another aspect, an electrical machine is provided. The electrical machine comprises at least one stator device as presently provided, and at least one rotor arranged in the at least one hollow core of the stator body of the at least one stator device.

The electrical machine can further comprise a liquid cooling circuit for providing liquid cooling of the electrical machine. The liquid cooling circuit can extend at least partially via the at least one slot of the stator body.

### Brief Description of the Drawings

Further details, advantages and objectives of the invention become apparent from the drawings and the detailed description. There is shown in the drawings:
- Fig. 1: a cross section of a stator body for a stator device in the plane of a stator sheet, according to an example;
- Fig. 2: a detail of a cross section of an electrical machine, according to an example, and
- Fig. 3: a longitudinal section of the electrical machine in Fig. 2.

### Detailed Description

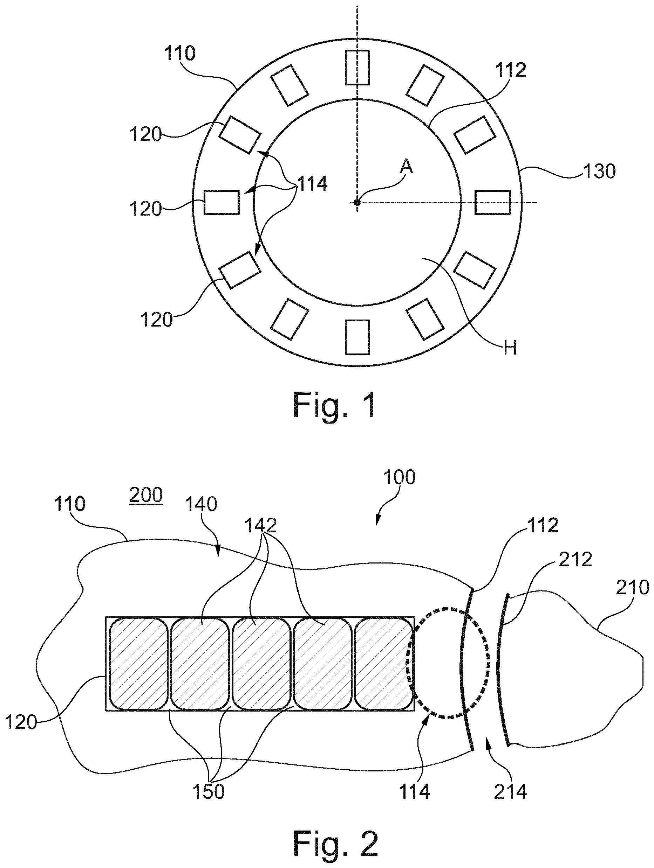

Fig. 1 shows schematically and exemplarily a cross section of a stator body 110 of a stator device for use in an electrical machine. The stator body 110 comprises a plurality of stator sheets 130 which have been laminated in a stacked manner parallel to a central axis A of the stator body 110 to form the stator body 110. The cross section in Fig. 1 is in the plane of a stator sheet 130. Accordingly, the presentation in Fig. 1 also corresponds to the shape of a single stator sheet 130. In an example, the stator body 120 is formed as a stack of largely identical stator sheets 130 which have been aligned regarding their geometrical features. The stator sheets 130 comprise electrically conductive material, for example, electrically conductive sheet metal.

The stator body 110 is essentially tubular, extending parallel to a central axis A around a hollow core H. The hollow core H serves for accommodating a rotor of the electrical machine. In particular, when the electrical machine is operating, the rotor will rotate in the hollow core H relative to the stator body 110.

The stator body 110 further comprises a plurality of slots 120. The slots 120 are arranged in the stator body 110 in an essentially circular manner around the hollow core H. Each of the slots 120 extends in the stator body 110 essentially parallel to the central axis A. The slots 120 serve for accommodating electrical conductors of a coil arrangement of the stator device. The coil arrangement produces a varying magnetic field which will drive the rotor in the hollow core H, when the electrical machine is operating.

Regarding the above described features and functions of the stator body 110, the stator body 110 does not distinguish essentially from the structure and functions of a conventional stator body of a stator device.

In addition to the aforesaid features, the stator body 110 further comprises in a region of each slot 120 a portion 114 of the stator body 110 which extends between the slot 120 and the hollow core H. In the shown example, in the plane of each stator sheet 130 a corresponding section of the slot 120 is entirely enclosed, thus separated from the corresponding section of the hollow core H, by material of the stator sheet 130.

Additionally, bonding is provided between adjacent ones of the plurality of stator sheets 130 which form the stator body 110. The bonding is provided such that a passage of liquid, especially liquid coolant, between adjacent ones of the stator sheets 130 is prevented. A passage of liquid between adjacent ones of the stator sheets 130 is in particular prevented in a region extending between each of the slots 120 and the hollow core H, i.e., corresponding to the portions 114 and their interconnecting portions along an inner periphery 112 of the stator body 110.

In an example production process, the bonding is produced by applying a layer of bonding material, for example, comprising resin, on at least one of the two facing surfaces of each pair of adjacent stator sheets 130 prior to their assembly. After assembly of the corresponding stator sheets 130 to their stacked arrangement as in the stator body 110, thermally hardening the bonding material is performed, in some examples, under pressure.

The portions 114 prevent that liquid transgresses between any of the slots 120 and the hollow core H in the plane of the stator sheet 130. In addition, the bonding prevents that liquid transgresses between adjacent ones of the stator sheets 130, in particular between any of the slots 120 and the hollow core H.

As a result, any of the slots 120, apart from accommodating one or more electrical conductors of a coil arrangement of the stator device, provides a liquid-tight duct. Therefore, liquid coolant can be guided, for example, pumped, through any of the slots 120 as part of a coolant cycle of the stator device. This enables a direct heat transfer from the stator body 110, especially each of the electrically conductive stator sheets 130, and from each of the electrical conductors of the stator device in a respective slot 120 to the cooling medium. In this way, a heat transfer, hence a cooling efficiency, can be increased relative to cooling channels which are moulded in (non-conductive) compound which has been cast in stator grooves. In addition, the ingress of coolant into the hollow core H, i.e., the rotor space of the electrical machine, is avoided, especially, without a necessity of an additional cartridge or sleeve between the inner periphery 112 of stator body 110, corresponding to an inner periphery of each stator sheet 130, and the hollow core H of the stator body 110. In this way, production costs can be reduced. Moreover, a distance between the stator device, including conductors in the slots 120, and the rotor can be kept small. A minimal width of the portions 114, corresponding to a distance between the inner periphery 112 of the stator body 110 and the slots 120, between 1 and 2 Millimetres has been found suitable.

The portions 114 provide an electrical connection between adjacent ones of the slots 120 in the region of the inner periphery 112 of the stator body 110. During operation of the stator device, this can give rise to short circuits and other currents which may negatively affect the magnetic field produced by the stator device and which do not occur in conventional stator designs using open grooves instead of the slots 120. However, it has been found that such efficiency losses in generating the magnetic field are outweighed in many applications by an increased power density and the advantages of improved cooling and simple production, as described above.

Fig. 2 shows schematically and exemplarily a detail of a cross section of an electrical machine 200. The electrical machine 200 comprises a stator device 100 having a stator body 110 and a coil arrangement 140. The electrical machine 200 further comprises a rotor 210.

The stator body 110 of the stator device 100 corresponds to the stator body 110 as described in connection with Fig. 1. Fig. 2 shows a detail of the stator body 110 in the region of a single slot 120. In the slot 120, various electrical conductors 142 are arranged. The electrical conductors 142 are parts of a coil arrangement 140 of the stator device 100. The conductors 142 do not fill a space in the slot 120 entirely. A remaining volume in the slot 120 provides a duct 150 for liquid coolant. As shown in Fig. 2, the duct 150 can be arranged such that liquid coolant is in direct contact with a surface, typically an electrically isolating surface layer, of any of the electrical conductors 142. In other examples, the electrical conductors 142 and the duct 150 are arranged differently in the slot 120, for example, in such manner that liquid coolant is not in direct contact with at least one of the electrical conductors 142.

The rotor 210 is arranged in the hollow core H of the stator device 110 and configured to rotate relative to the stator body 110 during operation of the electrical machine 200. An outer surface 212 of the rotor 210 is facing with the inner periphery 112 of the stator body at a small distance, forming a gap 214 between the stator device 100 and the rotor 210. Furthermore, the rotor 210 is configured to rotate about the central axis A of the hollow core H of the stator device 100, which constitutes also a central axis of the rotor 210. The coil arrangement 140 is configured to drive the rotor 210 when electric current is applied to the coil arrangement 140 during operation of the electrical machine 200.

The portion 114 of the stator body 110 extends between the slot 120 and the inner periphery 112 of the stator body 110. The portion 114 seals in particular the region of the gap 214 between the stator device 100 and the rotor 210 from the duct 150 extending in the slot 120.

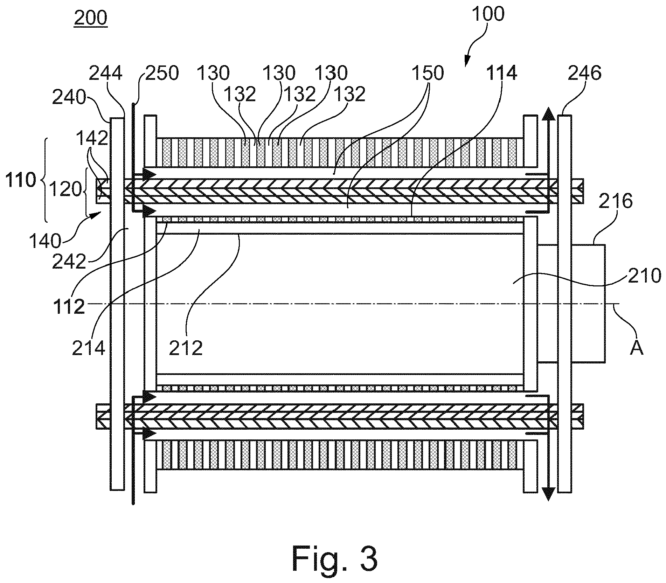

Fig. 3 shows schematically and exemplarily a longitudinal section of the electrical machine 200. Identical reference signs as in the previous Figs. 1 and 2 denote identical features. Fig. 3 further shows an essentially symmetric configuration of the electrical machine above and below the central axis A. Reference signs in Fig. 3 are provided only in the upper part of the illustration. However, the present description also applies correspondingly to the structures shown in the lower part of the illustration.

A plurality of stator sheets 130 are stacked and aligned to form the stator body 110. Between each pair of adjacent stator sheets 130 a bonding layer 132 is provided.

The electrical machine 200 further comprises a housing 240. A shaft 216 extends through the housing 240. The shaft 216 is connected to the rotor 210 and is arranged to transmit a torque produced by the electrical machine 200 to a desired application, for example, to a drive shaft of an electrically powered car. Moreover, the coil arrangement 140 and the housing 240 are arranged such that electrical contacting of the coil arrangement 140 to an external power source (not shown) is enabled.

The housing 240 further encloses a conduit 242 for guiding, and in some examples distributing, liquid coolant 250 from one or more coolant inlets 244 of the electrical machine 200 towards the duct 150 in any of the slots 120 of the stator device 100, as indicated by the arrows in Fig. 3. As further indicated by the arrows, the conduit 242 enclosed in the housing 240 also serves in some examples for collecting the liquid coolant after the liquid coolant has passed through the duct(s) 150 and for guiding the liquid coolant towards one or more coolant outlet(s) 246 of the electrical machine 200.

In some examples, the liquid coolant 250 comprises oil, such as transformer oil or gear oil.

The coolant inlet(s) 244, the conduit 242, the duct(s) 150 and the coolant outlet(s) 246 form parts of a coolant cycle of the electrical machine 200. In some examples, a coolant cycle of the electrical machine 200 further comprises at least one heat dissipating device (not shown) for dissipating heat of the liquid coolant after exiting through the coolant outlet(s) 246, and a coolant pump (not shown) for causing the liquid coolant to circulate in the cooling cycle of the electrical machine 200. In some examples, a pressure in the cooling cycle produced by the coolant pump is between 1 and 2 bars.

## Claims

1. Stator device (100) for an electrical machine (200), the stator device (100) comprising a plurality of stator sheets (130) laminated to form at least a portion of a stator body (110) of the stator device (100), wherein the stator body (110) comprises:
- at least one hollow core (H) for accommodating a rotor (210) of the electrical machine (200), and
- at least one slot (120) extending in the stator body (110) adjacent the hollow core (H), the slot (120) configured to accommodate at least one electrical conductor (142) of a coil arrangement (140) of the stator device (100) and to further provide at least one duct (150) for a liquid coolant (250) of the electrical machine (200);
wherein the plurality of stator sheets (130) are sealed against a passage of liquid between adjacent ones of the plurality of stator sheets (130) by means of a bonding (132) provided between the adjacent ones of the plurality of stator sheets (130), and
the at least one slot (120) is sealed from the hollow core (H) of the stator body (110) in a plane of at least one of the plurality of stator sheets (130) by a portion (114) of the stator body (110) extending between the slot (120) and the hollow core (H).

2. Stator device according to claim 1, wherein the at least one slot (120) is sealed from the hollow core (H) of the stator body (110) in the plane of the at least one of the plurality of stator sheets (130) by a portion of the stator sheet (130) extending between the slot and the hollow core.

3. Stator device according to claim 1 or claim 2, wherein the bonding (132) is provided between each pair of adjacent ones of the plurality of stator sheets (130).

4. Stator device according to any one of the preceding claims, wherein the at least one slot (120) is sealed from the hollow core (H) of the stator body (110) in a plane of each one of the plurality of stator sheets (130) by a portion of the stator body (110) extending between the slot (120) and the hollow core (H).

5. Stator device according to any one of the preceding claims, wherein each of the stator sheets (130) comprises electrically conductive material.

6. Stator device according to any one of the preceding claims, wherein the bonding (132) comprises a bonding layer (132) which is arranged between the adjacent ones of the plurality of stator sheets (130).

7. Stator device according to any one of the preceding claims, wherein the bonding (132) comprises resin.

8. Stator device according to any one of the preceding claims, wherein the stator body (110) comprises a plurality of slots (120) arranged around the hollow core (H).

9. Stator device according to any one of the preceding claims, wherein the at least one slot (120) extends at least essentially parallel to a central axis (A) of the rotor (210).

10. Stator device according to any one of the preceding claims, wherein the at least one slot (120) is configured to provide the at least one duct (150) for the liquid coolant (250) in a remaining volume of the slot (120) when the at least one electrical conductor (142) is arranged in the slot (120).

11. Stator device according to any one of the preceding claims, wherein the at least one slot (120) and a central axis (A) of the hollow core (H) extend at least essentially perpendicular to the plane of the at least one of the plurality of stator sheets (130).

12. Stator device according to any one of the preceding claims, further comprising a coil arrangement (140), the coil arrangement (140) being at least partially arranged in the at least one slot (120) and configured for electrically driving the rotor (210) of the electrical machine (200).

13. Electrical machine (200) comprising:
at least one stator device (100) according to any one of the preceding claims, and
at least one rotor (210) arranged in the at least one hollow core (H) of the stator body (110) of the at least one stator device (100).

14. Electrical machine according to claim 13, further comprising a liquid cooling circuit (230 - 246) for providing liquid cooling of the electrical machine (200), the liquid cooling circuit (150, 242, 244, 246) extending at least partially via the at least one slot (120) of the stator body (110).
